# EUROPEAN PATENT SPECIFICATION

(11) **EP 1 474 855 B1**
(45) Date of publication and mention of the grant of the patent: **29.07.2009**
(21) Application number: 03739634.8
(22) Date of filing: 10.02.2003
(51) Int. Cl.: H02G 3/04

(54) **HOUSING FOR PREFABRICATED ELECTRICAL CONDUCTORS**
GEHÄUSE FÜR VORGEFERTIGTE ELEKTRISCHE VERBINDER
LOGEMENT POUR CONDUCTEURS ELECTRIQUES PREFABRIQUES

(30) Priority: 13.02.2002 IT BS20020011
(43) Date of publication of application: 10.11.2004
(73) Proprietor: BBI Electric S.P.A., 25030 Torbole Casaglia (IT)
(72) Inventor: GHIDINELLI, Paolo, I-25030 Torbole Casaglia (Brescia) (IT); PETRONE, Libero, I-25030 Torbole Casaglia (Brescia) (IT)
(74) Representative: Sangiacomo, Fulvia
(86) International application number: PCT/IT2003/000063
(87) International publication number: WO 2003/069748

(56) References cited:
- EP-A- 0 106 535
- DE-A- 1 690 160
- US-B1- 6 323 421

## Description

### Field of the invention

This invention relates to the prefabricated electrical conductor field also known as bus ducts and in particular concerns a housing or container for the conducting elements forming the said prefabricated electrical conductors.

### State of the Technique

Prefabricated electrical conductors are electric lines extending in the space according to determinate routes. They are usually composed of straight and angular elements joined together consecutively to follow the desired route, installed with the aid of accessory components. The route created serves to transport electricity in general and for distributing the same to usage points connected by outlet junctions.

The elements forming these prefabricated electrical conductors are normally composed of a housing, also called a profile, open on one side, a number of bus bars located in the housing or profile through its opening, and a cover or closing element fixed by welding to the open side of the housing.

The conductor bars include phase bars, neutral bars and ground bar, these latter bars acting as protection bars. All the bars are covered with insulation sheath to prevent direct contact with them.

In order to form an electrical conductor following the desired route, the conductor elements are joined together consecutively with electrical stable element and the mobile ones of the said control device can reduce or anyway compromise the functionality of the push-fit plug. In addition, if the spider is made of plastic material, as seems to be more advantageous, its arms can flex beyond measure and, lacking to assure the anchoring action in the drain or do not adapt themselves to the various inside measures that drains can have.

The object of this invention is to remedy efficaciously the above complained disadvantages, so as to perfect the push-fit plug for drains, in order to assure the efficiency thereof in time, moreover without altering either the disposition of its components or their specific functions.

Such an object is achieved, on the one hand, by forming some openings in some elements of the control device in order to facilitate evacuation of particles or dirt as a reaction to axial movements of one element as to the other ones and, on the other hand, by connecting the arms of the spider for the self-centring with a ring which moreover will be able to be applied with an additional adapter-ring as well.

Really, the document EP-A- 0 106 535 discloses and electrical track comprising an elongated duct or main body and front cover which may be mad by extrusion. The main body may be provided with two lateral walls and two internal walls and, however, the lateral and internal walls are not connected at the top and the cover is snapped fitted to supporting brackets or to duct itself by intermediate means.

The present invention will be however expounded more in detail in the continuation of the description made in reference to the enclosed drawings, in which:
Fig. 1 shows an exploded view of the components of the plug; and
Fig. 2 shows a section of assembled plug and drain.

In said drawings there are represented a drain 11, that has a top flange 12 and a flared entrance 13 and at least two radial overflow openings 14, and a plug 15 with a push-fit closing and opening control.

Another objects of the invention is to provide a housing or profile for the conducting elements of prefabricated electrical conductors realised with extruded components that permit al least:
- a section continuity and uniform housing surfaces along the entire length, also at the outlet junctions;
- as easy junction fitting according to need;
- a reduced irradiated temperature;
- the possibility of associating the components on top of each other to form a double housing for two electrical conductors united in parallel.

These purposes are achieved according to the invention with a housing or profile that includes an extruded body and cover, wherein the body has a base wall from which two internal walls are raised at ninety degrees, which are separate at the top and create an open passage between them open at the top, and two external lateral walls, **characterised in that** each of said lateral walls joins at the top to the adjacent internal wall, and the cover rests on and is fixed to the top of the internal and external walls, closing the upper opening of the channel.

### Brief description of the drawings

Greater detail of the invention will become clear from the continuation of the description made with reference to the enclosed indicative and non-limiting drawings, in which:

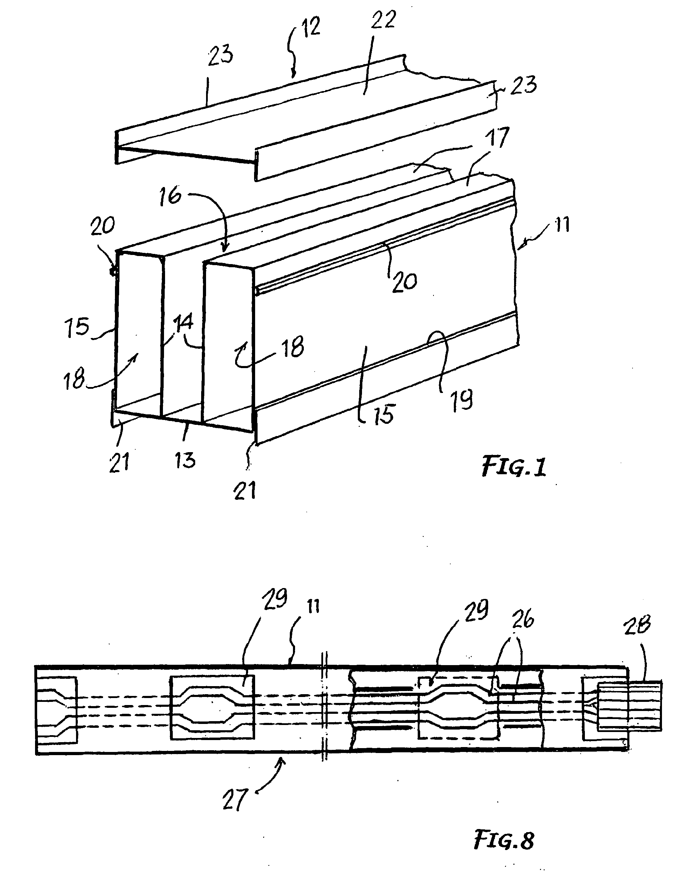

Fig. 1 shows a perspective view of a length of the components of a housing or profile, separated from each other;

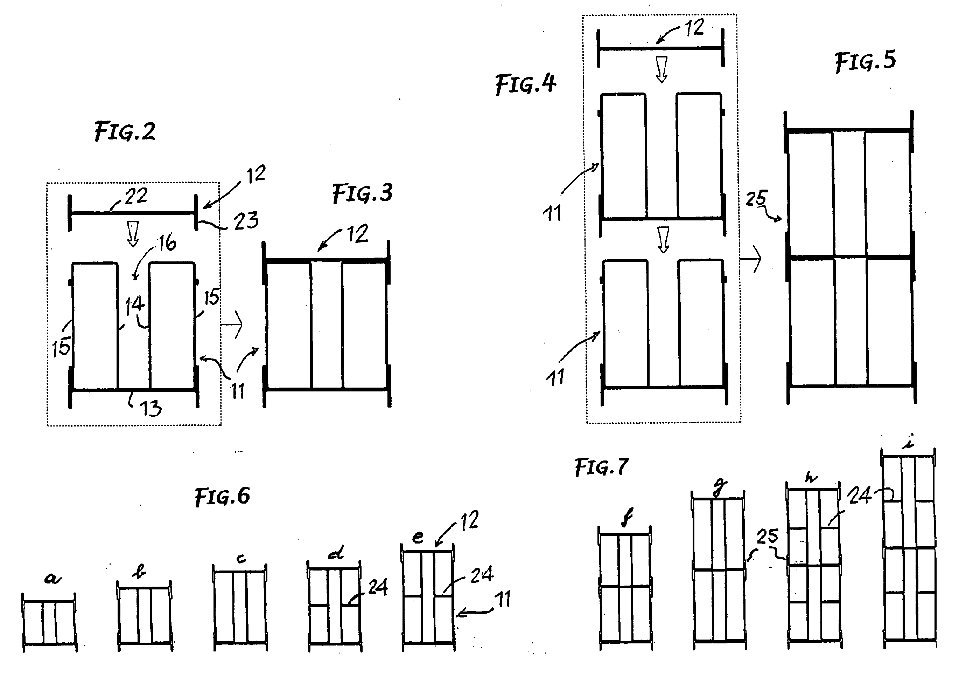

Fig. 2 shows an end view elevation of the separate components represented in Fig. 1;
Fig. 3 shows the components of Fig, 2 when assembled;
Fig. 4 shows an end view of separate components that can be placed on top of each other to form a double housing;
Fig. 5 shows the components of Fig. 4 when assembled;
Fig. 6 shows just as many single housings of different dimensions in a, b, c, d and e.
Fig. 7 shows just as many double housings in f, g, h and i; and
Fig. 8 shows a schematic plan view of a conductor element arranged for junction boxes.

### Detailed description of the Invention

The housing or profile of the invention is designed to form prefabricated electrical conductors and includes a main body, 11 and a cover or closing element, 12 advantageously obtained by extrusion.

The body 11 has a base wall 13 from which two internal walls 14 and two external lateral walls 15 are raised at ninety degrees parallel to each other. The internal walls 14 are separate at the top and delineate an open passage 16 between them open at the top. There lateral walls 15 are each joined at the top to the adjacent internal wall 14 with a cross-piece 17. The internal and external walls connected together delimit an aeration and/or service compartment 18.

The external face of each lateral wall 15 has a first, longitudinal step 19, close to the base wall 13 and a second step 10 close to the top. These steps 19, 20 are defined by local over-sizing of the thickness of each lateral wall 15, thus providing reinforcement and constituting means for attaching accessories such as electrical conductor suspension brackets for example.

The lateral walls 15 extend downwards beyond the base wall 113 by a lower fin 21.

The cover or closing element 12 has a horizontal wall 22 and two square end fins 23, substantially arranged as a T. The horizontal wall 22 of cover 12 rests on the top of the internal and external walls 14, 15 of the body 11, thus closing the upper opening of the passage 16, while the end fins 23 are located on the outside of the lateral walls 15 of the body and extend upwards above these to the same extent as the lower fins 21 under the base wall 13 of the body 11.

It should be noted that the body 11 can be created with different dimensions, especially in height as represented in Fig 6 a-e and that at least one intermediate cross-piece 24 can be provided between the external walls 15 and the internal walls 14.

Also, at least two bodies can be superimposed, as shown in Figures 4 and 5, so as to form a double housing 25. In this double housing the base wall 13 of the upper body meets the top of walls 14, 15 of the lower body, closing the passage 16 defined by the same. The closing cover 12 is then associated and fixed to the upper body. In this way, with different sizes of the main body 11, it is possible to have different sizes at least of double housings 25 as shown in Fig. 7 f-i.

Channel 16 of every body 11 is destined to receive the bars 26 of a conducting element 27 - Fig. 8 - for the formation of prefabricated electrical conductors or bar ducts with the aid of joint blocks 28.

When a conductor element 27 has to be formed with openings for current outlet boxes, perpendicularly to the wall of the base of the body, an opening 29 is made for each opening. Next, the bars 26 lead off to each opening in order to be coupled to an outlet box through a passage in the base wall or in the cover or closing element.

To permit the splitting of bars 26, it is sufficient in fact to remove parts of the two internal walls 14 leaving complete the external walls 15 alone. This works permits the maintenance of the continuity and uniformity of the housing section, of the external surfaces along the entire length of the conductor element and of the entire electrical conductor obtained, overall.

## Claims

1. A housing or profile for prefabricated electrical conductors composed of elements enclosing conductor bars united by an electrical joint between the bars and a mechanical joint between the housings of contiguous elements, where the housing or profile includes a main body (11) and a complementary cover or closing element (12) both formed by extrusion, by the fact and that said main body has a base wall (13) from which two internal walls (14) are raised at ninety degrees, separated at the top and delimiting an open channel (16) open upwards and two external lateral walls (15) **characterised in that** each of said lateral walls joins at the top to the adjacent internal wall, and **in that** the cover rests on and is fixed to the top of the internal and external walls (14, 15) closing the upper opening of the channel (16).

2. The housing or profile according to claim 1, in which an external face of each lateral wall (15) of the main body has two longitudinal steps (19, 20) at two different levels constituting means of reinforcement and attachment for the accessories.

3. The housing or profile according to claims 1 and 2, in which each lateral wall (15) of the main body extends downwards below the base wall with a lower fin (21).

4. The housing or profile according to the previous claims, in which the internal and lateral walls (19, 20) united together create a compartment (18).

5. The housing or profile according to any of the previous, claims in which the cover or closing element (12) has a horizontal wall (22) resting on the top of the internal and lateral walls of the main body and two square end fins (23) protruding above and below the said horizontal wall so as to extend beyond the lateral walls of the main body.

6. The housing or profile according to any of the previous claims, in which the main body are provided with one or more openings in a perpendicular direction to the base wall by a removal of part of the internal walls in order to provide outlet openings for conductor bar current.

7. The housing or profile according to any of the previous claims, in which a main body may be placed on top of at least another body to form a double housing, the base wall of the body placed on top constituting the cover for the body below and the top body being closed with a proper cover.

## Patentansprüche

1. Gehäuse oder Profil für vorgefertigte elektrische Verbinder, bestehend aus Elementen, die Zuführungsschienen einschließen, die über eine elektrische Verbindung zwischen den Schienen und eine mechanische Verbindung zwischen den Gehäusen aneinander angrenzender Elemente verbunden sind, wobei das Gehäuse oder Profil einen Hauptkörper (11) und eine zusätzliche Abdeckung oder ein Schließelement (12) umfasst, die beide durch Extrusion geformt werden, **dadurch gekennzeichnet, dass** der Hauptkörper eine Bodenwand (13), von der sich zwei Innenwände (14) in einem Winkel von 90° aufragen, die auf der Oberseite getrennt sind und einen offenen Kanal (16) begrenzen, der nach oben geöffnet ist, sowie zwei äußere Seitenwände (15) aufweist, **dadurch gekennzeichnet, dass** die Seitenwände mit der Oberseite der angrenzenden Innenwand verbunden sind und dass die Abdeckung auf der Oberseite der Innen- und Aussenwände (14, 15) aufliegt und daran befestigt ist, sodass die obere Öffnung des Kanals (16) geschlossen wird.

2. Gehäuse oder Profil nach Anspruch 1, wobei eine Außenfläche jeder Seitenwand (15) des Hauptkörpers zwei Längsansätze (19, 20) auf zwei unterschiedlichen Ebenen aufweist, die ein Mittel zur Verstärkung und Befestigung für das Zubehör darstellen.

3. Gehäuse oder Profil nach Anspruch 1 und 2, wobei sich jede Seitenwand (15) des Hauptkörpers mit einem unteren Flügel (21) nach unten unter die Bodenwand erstreckt.

4. Gehäuse oder Profil nach den vorhergehenden Ansprüchen, wobei die Innen- und Seitenwände (19, 20) zusammen eine Kammer (18) bilden.

5. Gehäuse oder Profil nach einem der vorhergehenden Ansprüche, wobei die Abdeckung oder das Schließelement (12) eine horizontale Wand (22), die auf der Oberseite der Innenwände und Seitenwände des Hauptkörpers aufliegt, und zwei quadratische Endflügel (23) aufweist, die über und unter der horizontalen Wand hervorstehen, sodass sich diese über die Seitenwände des Hauptkörpers hinaus erstrecken.

6. Gehäuse oder Profil nach einem der vorhergehenden Ansprüche, wobei der Hauptkörper durch Entfernen eines Teils der Innenwände mit einer oder mehreren Öffnungen in einer senkrechten Richtung zu der Bodenwand versehen wird, sodass Auslassöffnungen für den Strom der Zuführungsschienen vorgesehen sind.

7. Gehäuse oder Profil nach einem der vorhergehenden Ansprüche, wobei ein Hauptkörper auf mindestens einem anderen Körper platziert werden kann, um ein doppeltes Gehäuse zu bilden, wobei die Bodenwand des Körpers, der auf der Oberseite platziert wird, die Abdeckung für den Körper darunter bildet, und wobei der obere Körper durch eine geeignete Abdeckung verschlossen wird.

## Revendications

1. Logement ou profil pour conducteurs électriques préfabriqués composé d'éléments enfermant des barres conductrices unies par un joint électrique entre les barres et un joint mécanique entre les logements d'éléments contigus, où le logement ou le profil inclut un corps principal (11) et un couvercle complémentaire ou élément de fermeture (12) l'un et l'autre formés par extrusion, **caractérisé en ce que** ledit corps principal comporte une paroi de base (13) de laquelle deux parois internes (14) sont élevées à quatre-vingt-dix degrés, séparées au sommet et délimitant un canal ouvert (16) ouvert vers le haut et deux parois latérales externes (15), **caractérisé en ce que** chacune desdites parois latérales se rejoint au sommet de la paroi interne adjacente, et **en ce que** le couvercle repose sur et est fixé au sommet des parois internes et externes (14, 15) fermant l'ouverture supérieure du canal (16).

2. Logement ou profil selon la revendication 1, dans lequel une face externe de chaque paroi latérale (15) du corps principal comporte deux marches longitudinales (19, 20) à deux niveaux différents constituant un moyen de renfort et d'attachement pour les accessoires.

3. Logement ou profil selon les revendications 1 et 2, dans lequel chaque paroi latérale (15) du corps principal s'étend vers le bas en dessous de la paroi de base avec une ailette inférieure (21).

4. Logement ou profil selon les revendications précédentes, dans lequel les parois internes et latérales (19, 20) unies ensemble créent un compartiment (18).

5. Logement ou profil selon l'une quelconque des revendications précédentes, dans lequel le couvercle ou élément de fermeture (12) comporte une paroi horizontale (22) reposant au-dessus des parois internes et latérales du corps principal et deux ailettes d'extrémité carrées (23) ressortant au-dessus et en dessous de ladite paroi horizontale de façon à s'étendre au-delà des parois latérales du corps principal.

6. Logement ou profil selon l'une quelconque des revendications précédentes, dans lequel le corps principal est pourvu d'une ou plusieurs ouvertures dans une direction perpendiculaire à la paroi de base par un retrait d'une partie des parois internes afin de fournir des ouvertures de sortie pour le courant de la barre de conducteur.

7. Logement ou profil selon l'une quelconque des revendications précédentes, dans lequel un corps principal peut être placé en haut d'au moins un autre corps de façon à former un logement double, la paroi de base du corps placé en haut constituant le couvercle pour le corps en dessous et le corps supérieur étant fermé avec un couvercle adéquat.
